## Europäisches Patentamt
## European Patent Office
## Office européen des brevets

(19)

(11) Veröffentlichungsnummer: **0 228 398**
**B1**

(12)

# EUROPÄISCHE PATENTSCHRIFT

(45) Veröffentlichungstag der Patentschrift:
06.03.89

(51) Int. Cl.⁴: **B 01 D 53/36,** B 01 J 31/18

(21) Anmeldenummer: 86903380.3

(22) Anmeldetag: 24.06.86

(86) Internationale Anmeldenummer:
PCT/EP 86/00368

(87) Internationale Veröffentlichungsnummer:
WO 87/00077 (15.01.87 Gazette 87/01)

(54) KATALYSATOR ZUM ENTFERNEN VON STICKOXIDEN, KOHLENMONOXID UND/ODER RESTKOHLENWASSERSTOFFEN AUS ABGASEN.

(30) Priorität: 25.06.85 DE 3522637

(43) Veröffentlichungstag der Anmeldung:
15.07.87 Patentblatt 87/29

(45) Bekanntmachung des Hinweises auf die Patenterteilung:
06.03.89 Patentblatt 89/10

(84) Benannte Vertragsstaaten:
AT BE CH DE FR GB LI LU NL SE

(56) Entgegenhaltungen:
DE-B-1 542 520
DE-C-2 743 031

(73) Patentinhaber: STEINBACH, Friedrich, Trenknerweg 133, D-2000 Hamburg 52 (DE)

(72) Erfinder: THRAMS, Norbert, Klaus- Groth- Strasse 68, D-2070 Ahrensburg (DE)
Erfinder: JESSE, Dieter, Nernstweg 25, D-2000 Hamburg 50 (DE)
Erfinder: STEINBACH, Friedrich, Trenknerweg 42, D-2000 Hamburg 42 (DE)

(74) Vertreter: Wuesthoff, Franz, Dr.- Ing., Patentanwälte Wuesthoff- v. Pechmann -Behrens- Goetz- v. Hellfeld Schweigerstrasse 2, D-8000 München 90 (DE)

## Beschreibung

Die Erfindung betrifft einen Katalysator zum Entfernen von Stickoxiden, Kohlenmonoxiden oder Kohlenwasserstoffen aus Abgasen mit technischen Metallphthalocyaninen, die mit NO und $O_2$ behandelt werden sowie ein Verfahren zum Herstellen eines derartigen Katalysators.

Ein derartiger Katalysator bzw. ein solches Verfahren sind aus der DE-PS-2 743 031 bekannt.

Gegenüber dem Stand der Technik ergibt sich die Aufgabe, den bekannten Katalysator derart weiterzubilden, daß in starken Gasströmungen eine Mitführung der aktiven Komponente verhindert ist, daß durch eine große Oberfläche die spezifische Aktivität der Katalysatoren erhöht wird und daß eine Aktivitätsminderung durch Partikelabrieb verhindert wird.

Die Aufgabe wird erfindungsgemäß gelöst durch Katalysatoren zum Entfernen von Stickoxiden, Kohlenmonoxid und/oder Restkohlenwasserstoffen aus Abgasen, erhältlich durch Behandlung von Metallphthalocyaninen mit NO und/oder $O_2$ bei erhöhten Temperaturen, dadurch gekennzeichnet, daß Metallphthalocyanine vor der Behandlung mit NO und/oder $O_2$ auf oder in einen Träger auf- bzw. eingebracht werden, und daß der Träger anschließend mit Stickoxiden und/oder Stickoxid-Kohlenmonoxid-Gemischen und/oder Sauerstoff und/oder Sauerstoff-Kohlenmonoxid-Gemischen oder nitrierenden oder oxidierenden Gasen oder Dämpfen bei Temperaturen oberhalb 120° C oder mit nitrierenden oder oxidierenden Lösungen behandelt wird.

Aufgrund der erfindungsgemäß erzeugten innigen Vermengung oder Verbindung von Katalysator und Träger wird die Mitführung der aktiven Komponente bei starken Gasströmen verhindert. Die große Oberfläche der Träger erhöht die spezifische Aktivität der Katalysatoren, während durch die ganz oder teilweise das Trägervolumen durchdringende Einlagerung der aktiven Katalysatoren eine Aktivitätsminderung durch Partikelabrieb verhindert wird. Auch wurde beobachtet, daß durch die chemische und/oder physikalische Wechselwirkung zwischen Katalysator und Träger die katalytische Aktivität der aktiven Komponente erhöht wird.

Die erfindungsgemäßen Träger-Katalysatoren können bei allen typischen Abgasgeschwindigkeiten eingesetzt werden, ohne daß die aktive Katalysatorkomponente mitgeführt wird.

Gegenüber dem Stand der Technik sind die Abgaskatalysatoren auf Metallphthalocyanin-Basis derart auf Trägermaterialien mit geeigneten Oberflächen auf- bzw. eingebracht, daß zum einen eine hohe Gasgeschwindigkeit ohne den bei Verwendung reiner, trägerloser Katalysatoren auftretenden hohen Staudruck ermöglicht ist, ohne daß bei hohen Gasgeschwindigkeiten die aktive Katalysatorsubstanz mitgerissen oder ausgeblasen würde. Auch bei Oberflächenabtrag durch Staub oder Verunreinigungen im Abgas enthält die ständig neu erzeugte Oberfläche den Katalysator (Vollkontakt).

Es hat sich gezeigt, daß die erfindungsgemäß erzeugten Träger-Katalysatoren bis zu Strömungsgeschwindigkeiten von $10^6 h^{-1}$ im Temperaturbereich von 0 bis 600° C zur Entfernung von Stickoxiden, Kohlenmonoxid und unverbrannten Restkohlenwasserstoffen eingesetzt werden können.

Die gleichmäßige Verteilung der eingebrachten Metallphthalocyanine im Träger-Volumen (bei Vollkontakt) oder in einer oberflächennahen Schicht bei nicht durchgefärbten Träger-Körpern oder Körnungen ist durch Infrarotspektroskopie von Schnitten oder Brüchen belegt. Durch eine Bandenverschiebung gegenüber dem reinen Metallphthalocyanin ist die chemische wechselwirkung mit den Trägern nachgewiesen. Diese für die Träger-Katalysatoren gegenüber trägerfreien Katalysatoren charakteristische Bandenverschiebung im IR-Spektrum steht in direktem Zusammenhang mit der katalytischen Aktivität. Das erfindungsgemäß erzeugte katalytische System aus Träger und modifiziertem Metallphthalocyanin weist also spezifische katalytische Eigenschaften auf, die von denen des trägerfreien Metallphthalocyanins verschieden sind.

Als Träger finden Verwendung keramische Werkstoffe, insbesondere Porzellan, Steingut, Steinzeug, Kieselgur, Siliziumoxid, Cordierit, Steatit, Mullit, Aluminiumoxid, Ton, Tonerde, Kaolin, Blumentopfscherben, Lehm oder Perlit.

Weiterhin finden Verwendung Mörtel oder Füllstoffe, insbesondere Zement, Kalkstein, Dolomit, Gips, Kreide, Mergel, Tuff, Schlacke, Bimsstein, Muschelkalk, Sandstein oder Schamotte.

Weiterhin finden als Träger Verwendung Alumosilikate, insbesondere Zeolithe vom A, X Y oder ZSM-Typ oder natürliche Zeolithe. Ferner Feldspat, Magnesiumsilikat, Zirkonsilikat, Wasserglas, Kieselsäure oder Boehmit.

Weiterhin finden als Träger Verwendung Gläser, insbesondere Sinterglas, Glaswolle oder offenporiges Sinterglas.

Als Träger finden ferner Verwendung Siliziumcarbid, Borcarbid, Aktivkohle, Graphit, Oxide, insbesondere Magnesiumoxid, Titanoxid, Sintermagnesia, Aluminiumoxid, Seltenerdoxid, Zirkonoxid, Zirkonerde, Schwermetalloxide, Chromoxid, Eisenoxid, Nickeloxid, Kupferoxid, Spinell, Manganoxid, Braunstein, Bauxit, Zinkoxid, Zinkweiß, Titanweiß, Aluminiumtitanat, Vanadinoxid oder Vanadat.

Ebenso finden als Träger Verwendung Sulfide, insbesondere Schwermetallsulfide oder Zinkblende, des weiteren Carbonate, Phosphate oder Sulfate, insbesondere Aluminiumphosphat, Bariumcarbonat, Kalkstein, Bariumsulfat, ferner Molybdate oder Wolframate.

Als Träger finden Verwendung Metalle, insbesondere Bleche, Folien, Pulver oder Formkörper.

Als Träger finden Verwendung Mischungen aus den genannten Stoffen und Stoffklassen. Die Träger können als Pulver, Presslinge, Körnungen, Wabenkörper, Formkörper, Schwammkörper oder Schwammskelette verwendet werden. Ferner sind Überzüge eines der genannten Materialien oder auch eines Gemisches über ein anderes Material zu verwenden, insbesondere Überzüge über Metallbleche oder Metallfolien.

Als Lösungsmittel eignen sich für die erfindungsgemäßen Herstellungsverfahren insbesondere Schwefelsäure, Ameisensäure, Essigsäure, Propionsäure, Alkansäuren, Chlorsulfonsäure, Chlor- und Dichlor- und Trichloressigsäure, Chlornaphthalin, Bromnaphthalin, Chinolin, Benzophenon, N-Ethylcarbazol, Chlorbenzol, Pyridin, Pyrrol, organische Amine, flüssiges Ammoniak, flüssiges Schwefeldioxid, Polyphosphorsäure und Dimethylsulfoxid.

Die Löslichkeit ist teilweise sehr gering, wenige mg pro Liter; dies ist für die Herstellung von MPc getränkten Oberflächenschichten ausreichend. Die Temperaturbereiche der Anwendung gehen vom Erstarrungs- bis nahe zum Siedepunkt des Lösungsmittels.

Statt die Metallphthalocyanine selbst vollständig zu lösen, läßt sich eine Tränkung auch mit Suspensionen oder Gemischen aus Suspensionen und Lösungen durchführen.

Vor dem Aufbringen auf Träger können die Metallphthalocyanine gereinigt werden.

Statt die Metallphthalocyanine selbst zu lösen und die Träger mit der Lösung oder Suspension zu tränken, werden die Metallphthalocyanine weiterhin auch durch Überführung in lösliche Derivate gelöst, mit deren Lösung die Träger getränkt werden. Nach Abziehen des Lösungsmittels werden die Metallphthalocyanine in den aktiven Katalysator überführt, wobei die Löslichkeit bewirkenden Seitengruppen oxidativ oder thermisch zumindest teilweise abgespalten werden. Als Löslichkeit bewirkende Seitengruppen sind Alkyl-, z. B. tert.-Butyl- und Arylgruppen, Hydroxylgruppen sowie Gruppen der Art NHR, -NR$_2$, -SO$_2$R, -SO$_2$NHR, -SO$_2$NR$_2$ oder -SiR$_3$ zu nennen, wobei R einen Kohlenwasserstoffrest darstellt.

Ferner können die Metallphthalocyanine in wasserlösliche Derivate überführt werden, wobei insbesondere Sulfonsäuren der Metallphthalocyanine Verwendung finden, die wegen ihres hydrophilen Charakters gut auf hydrophilen Oberflächen der Träger haften.

Weiterhin können die Träger mit Vorprodukten oder Lösungen von Vorprodukten der Metallphthalocyanine getränkt werden, so daß die Synthese der Metallphthalocyanine in und auf dem Träger geschieht. Hierzu eignen sich Isoindolenin oder ein Derivat und die komplementäre metallhaltige Verbindung, gelöst in wasserlöslichen Lösungsmitteln wie Glykol, Diglykolmonoethylether oder Diethanolamin. Nach Tränkung der Träger geschieht die Synthese durch Erhitzen auf etwa 120°C.

Direkte Synthese ist auch möglich nach Tränkung des Trägers mit Metallsalzlösungen, z. B. Acetatlösung, Trocknung, weiterer Tränkung mit geeigneten Vorstufen des Phthalocyaningerüstes, insbesondere Phthalodinitril, Lösungen von Dicyanobenzol in z. B. Nitrobenzol, Mischungen von Phthalsäureanhydrid, Harnstoff und Ammoniummolybdat und direkter Synthese bei erhöhten Temperaturen.

Auch polymere Metallphthalocyanine sind in bzw. auf Trägern zu synthetisieren. Die Träger werden mit Metallsalzlösungen getränkt und getrocknet und durch Erhitzen mit Tetracyanobenzol im Autoklaven unter Vakuum wird in und auf dem Träger polymeres Metallphthalocyanin gebildet, aus dem der aktive Katalysator hergestellt wird. Als Träger sind hier auch Bleche oder Metallpulver und Formkörper einzusetzen, auf denen mit Tetracyanobenzol durch Erhitzen im Autoklaven direkt ein Überzug aus polymeren Metallphthalocyaninen herzustellen ist, der in den aktiven Katalysator überführt wird.

Als Träger sind Pulver, Körnungen und Formkörper verwendbar.

Das Metallphthalocyanin wird durch Einführen der von den Färbeverfahren der Textiltechnik bekannten funktionellen Gruppen löslich gemacht, die Träger getränkt, die Gruppen nach den bekannten Nachbehandlungen wieder abgespalten und die derart eingelagerten Metallphthalocyanine werden in den Katalysator überführt.

Auch die bekannten Methoden der Verwendung lipophilisierender Oberflächengruppen sind anwendbar, wodurch die Metallphthalocyanine in und auf den Trägern besonders gut haften. Solche Oberflächenlipophilisierung der Träger geschieht insbesondere mittels der sogenannten Organosiliconbeschichtungen, wie (CH$_3$)SiNHSi(CH$_3$)$_3$ oder R$_3$SiNH(SiR$_2$NH)$_n$SiR$_3$ (mit n = 0 bis 3, R = C$_1$ bis C$_6$ Alkylen).

Statt die Metallphthalocyanine durch Behandlung mit Stickoxiden und/oder Stickoxid-Kohlenmonoxid-Gemischen und/oder Sauerstoff und/oder Sauerstoff-Kohlenmonoxid-Gemischen oder nitrierenden oder oxidierenden Gasen oder Dämpfen bei Temperaturen oberhalb 120°C zu aktivieren, kann die Aktivierung auch durch eine innige Vermengung mit Übergangsmetalloxiden und/oder Oxidgemischen direkt erreicht werden. Diese innige Vermengung tritt insbesondere dann auf Trägern auf, wenn die beiden Verbindungen gleichzeitig oder nacheinander auf oder in den porösen Träger auf- bzw. eingebracht werden. Die bereits genannte Wechselwirkung zwischen Metallphthalocyanin und Träger ist bei Übergangsmetalloxiden so günstig, daß die Aktivierung des Phthalocyanins direkt eintritt. Es ist bekannt, daß Metalloxide und Mischungen derselben vielfältig für katalytische Reaktionen mit NO und insbesondere CO eingesetzt werden.

Es wurde daher besonders sorgfältig durch Aktivitäts- und Umsatzmessungen geprüft, daß die durch gemeinsames Auf- bzw. Einbringen von Metalloxid und Metallphthalocyanin auf bzw. in Träger nerzeugten Katalysatoren sich von solchen, bei denen nur das Metalloxid auf bzw. in den Träger auf- oder eingebracht ist, unterscheiden. Diese Prüfung ist besonders überzeugend, wenn erst das Übergangsmetalloxid eingeführt, dann dessen Aktivität kontrolliert und anschließend das Metallphthalocyanin dazu eingeführt wird. Es ergeben sich deutliche Umsatzsteigerungen gegenüber den nur mit Oxidgetränkten Trägern, insbesondere im Temperaturbereich unterhalb 250°C.

Nachfolgend ist die Erfindung anhand von Beispielen näher erläutert:

Bei allen folgenden Beispielen wird zur Charakterisierung der Aktivität der Katalysatoren ein Testgas benutzt. Es besteht, falls nicht anders vermerkt, aus Stickstoff mit einer Beimengung von 1000 ppm Stickoxid und 3000 ppm Kohlenmonoxid. Die Raumgeschwindigkeiten sind unterschiedlich und jeweils angegeben.

Die zur Charakterisierung der Aktivität benutzte Anspringtemperatur ist definiert als die Temperatur, bei der ein Umsatz von 2 bis 5 % erreicht wird.

Die Durchsetzung des gesamten Volumens mit Katalysator ist bei Vollkontakten durch Schnitte, Brüche und IR-spektroskopische Untersuchungen belegt. Entsprechendes gilt für die Färbung von Randschichten.

Die angegebenen Meßzeiten bezeichnen keine Lebensdauern (Standzeiten) der Katalysatoren, sondern den Abbruch der Messungen aus Gründen der Teststandkapazitäten bei unveränderter Aktivität der Katalysatoren.

Metallphthalocyanin ist mit MPc abgekürzt.

## Beispiele

1. 160 g gereinigtes CuPc werden in 1.6 l Ameisensäure gelöst bei 80°C. In diese Lösung wird ein auf 90°C vorgewärmter Cordierit Wabenkörper (4″ x 6″) für 15 Minuten eingetaucht und anschließend bei 90°C 7 bis 10 h lang getrocknet. Durch die Tränkung ist der Wabenkörper mit 11 g CuPc durchgefärbt (ca. 2 Gew.-% CuPc in der Gesamtmasse). Durch Behandlung mit einem Gasgemisch aus Stickstoff mit 1000 ppm Stickoxid und 3000 ppm Kohlenoxid bei einer Volumengeschwindigkeit von 250 h-1 ausgehend von Raumtemperatur und im Verlauf von 12 h auf 580°C steigend, bei 580°C 2 h konstant, und Abkühlen im gleichen Gasgemisch wird der Katalysator erzeugt, der das gesamte Volumen durchsetzt (Vollkontakt).

Der so erzeugte Trägerkatalysator hat im Testgasgemisch von 250 h-1 eine Anspringtemperatur von 180°C, der Umsatz bei 440°C beträgt 50 %, bei 520°C 90 %. Die Meßzeit beträgt 450 h.

Ein auf diese Weise hergestellter Katalysator wird mit einem modifizierten Testgas, in dem CO vollständig durch ebensoviel H$_2$ ersetzt ist, getestet. Die NO-Umsätze sind im Rahmen der Meßgenauigkeit gleich.

Ein weiterer derart hergestellter Trägerkatalysator wird einem Gastrom von 500 000 h-1 ausgesetzt. Auch nach 50 h zeigt ein nachgeschaltetes Filter nicht die geringste Blaufärbung, es gibt also keine Mitführung des MPc.

Ein weiterer derart aus CuPc auf Cordierit Wabenkörper hergestellter Katalysator wird einem Dauertest unterworfen. Bei 300°C beträgt der Umsatz 55 %; diese Aktivität wird über 1100 h ohne erkennbare Minderung aufrechterhalten.

Ein ebenso hergestellter mit CuPc durchgefärbter Wabenkörper wird in reinem NO von 0.6 l/h im Verlauf von 12 h auf 500°C hochgeheizt und 2 h bei dieser Temperatur konstant gehalten. Nach Abkühlen in Stickstoff zeigt der so erzeugte Katalysator im wesentlichen die gleiche Aktivität:

Anspringtemperatur 200°C, 90 % Umsatz bei 520°C. Die Meßzeit beträgt 220 h.

Der zuletzt beschriebene Trägerkatalysator wird einem Testgas, dem 100 ppm Stickstoffdioxid beigemischt sind, ausgesetzt. Das Stickstoffdioxid wird vollständig beseitigt, die Umsätze bezüglich Stickoxid sind unverändert.

Entsprechende Katalysatoren werden mit CuPc in Essigsäure hergestellt. Die Umsätze sind analog.

Analoge Katalysatoren werden statt mit CuPc auch mit CoPc und NiPc hergestellt. Die Aktivierung geschieht mit Testgas. Die Anspringtemperaturen bei den aus CoPc hergestellten Trägerkatalysatoren liegen bei 280°C, bei den aus NiPc hergestellten Trägerkatalysatoren liegen bei 190°C.

2. Rohrstücke aus offenporigem Sinterglas werden entsprechend Beispiel 1 behandelt. Die durchgefärbten Sinterglasrohrstücke werden im Testreaktor so angeordnet, daß ein Schüttbett von 1 Liter Volumen entsteht und durch Behandlung mit Testgas in den aktiven Katalysator überführt (nach Aufheizen 2 h bei 510°C). Der so hergestellte Trägerkatalysator hat bei 180°C seine Anspringtemperatur und bei 400°C 70 % Umsatz.

Entsprechende Katalysatoren werden mit CuPc in Essigsäure hergestellt. Die Umsätze sind analog.

Auf die gleiche Weise werden Katalysatoren statt mit CuPc auch mit CoPc und NiPc hergestellt. Die Aktivierung geschieht mit Testgas. Die Anspringtemperaturen bei den aus CoPc hergestellten Trägerkatalysatoren liegen bei 280°C, bei den aus NiPc hergestellten Trägerkatalysatoren liegen bei 190°C.

3. Ein entsprechend Beipiel 1 und 2 mit NiPc hergestellter Katalysator wird bei 400°C mit Testgas unterschiedlicher Raumgeschwindigkeit getestet: Bei 200 h⁻¹ ist der Umsatz 100 %, bei 400 h⁻¹ 86 %, und bei 1400 h⁻¹ 45 %. Die Gesamtmeßzeit beträgt 700 h.

4. Zeolithgranulat (Typ Y) wird entsprechend Beispiel 1 mit CuPc gefärbt. 100 ml der so gefärbten Körner werden mit Testgas aktiviert (nach Aufheizen 4 h bei 540° C). Der so erzeugte Katalysator hat im Testgasgemisch bei 1000 h⁻¹ Raumgeschwindigkeit bei 400° C einen Umsatz von 60 %.

5. Kieselgur (Pulver) wird entsprechend Beispiel 1 mit CuPc gefärbt und durch Ausstreichen auf einer Lochplatte in Körner überführt. Nach Aktivierung mit Testgas bei 540° C haben 100 ml dieser Körnung im Testgasgemisch bei 1000 h⁻¹ Raumgeschwindigkeit bei 300° C einen Umsatz von 50 %.

Entsprechend wird Zeolithpulver benutzt (ZSM Typ). Eine Körnerschüttung von 100 ml hat nach Aktivierung einen Umsatz von 80 % bei 300° C.

Entsprechend wird Zinkoxidpulver sowie Titanoxidpulver verwendet. Die Schüttungen aus durchgefärbten Körnern zeigen Umsätze von 35 % bei 300° C.

Entsprechend wird Talkum oder ein anderes Magnesiumsilikatpulver gefärbt und gekörnt. Nach Aktivierung mit Testgas bei 540° C hat eine 1 Liter Körnerschüttung bei 250 h⁻¹ eine Anspringtemperatur von 60° C. Der Umsatz bei 250° C beträgt 80 %.

Wird dieser Katalysator bei 240° C einem Testgasgemisch mit reduziertem CO-Anteil (1000 ppm.) ausgesetzt, so beträgt der Umsatz 78 %.

6. Ein nach Beispiel 1 hergestellter Trägerkatalysator wird statt mit einem Cordierit Wabenkörper mit Blumentopfscherben erzeugt. Die Anspringtemperatur liegt bei 200° C, der Umsatz wegen der schlechteren Geometrie niedriger, 40 % bei 520° C.

7. Entsprechend Beispiel 2 werden Aluminiumoxidkugeln und Aluminiumoxidgrünlinge (ungesinterte Kugeln) gefärbt. Die Färbung erstreckt sich auf eine Randschicht. Die im Testgas bei 500° C aktivierten Trägerkatalysatoren zeigen bei 1000 h⁻¹ bei 450° C einen Umsatz von 40 %.

Ein auf diese Weise hergestellter Katalysator wird mit einem Testgas ohne CO aber mit 1000 ppm NO und NH₃ getestet. Der Umsatz bei 450° C liegt bei 35 %.

8. Zinkoxid, ebenso Titanoxid, ebenso Aluminiumoxid werden mit Wasser angeteigt und ca. 10 Gew.-% CuPc-pulver zugemischt. Die so hergestellten blauen Pasten werden wie in Beispiel 5 mittels einer Lochplatte gekörnt. Nach Überführung in den aktiven Katalysator in Testgas bei 540° C für 4 h entstehen Katalysatoren mit Umsätzen von 30 bis 40 % bei 400° C.

Weitere derart erzeugte Pasten werden auf Metallbleche aufgestrichen bzw. haften nach Tauchen auf aufgerauhten Blechen (z. B. Alu). Die vorher geeignet gefalteten oder gerollten Bleche werden in den Testreaktor eingesetzt. Nach Aktivierung mit Testgas bei 500° C beträgt die Anspringtemperatur 220° C, bei 500° C werden 70 % Umsatz erzielt.

Werden die Katalysatoren statt mit CuPc mit CoPc hergestellt, sind die Anspringtemperaturen durchweg etwa 20 bis 30° C höher.

9. Aus Al(OH)₃, Natriumsilikat, Triethanolamin wird bei 90° C nach der üblichen Methode eine Zeolithsynthese (NaY) durchgeführt, die durch die Gegenwart einer kräftig gerührten CuPc Suspension modifiziert ist. Der ausfallende Zeolithniederschlag ist mit dem suspendierten CuPc-Pulver vermischt. Nach Trocknen werden entsprechend Beispiel 5 Körner erzeugt. Der so hergestellte Katalysator zeigt im wesentlichen die Aktivität wie in Beispiel 4.

In ähnlicher Weise wird durch Ausfällen aus Aluminiumsalzlösung mit Ammoniak ein mit CuPc Partikeln durchsetztes Aluminumhydroxid hergestellt, das nach Trocknen und Erhitzen und Aktivieren in Testgas einen aktiven Katalysator mit 200° C Anspringtemperatur ergibt.

10. 4g Cu-dihydroxy-cyclotetraisoindolenin werden aus 15 g CuPc durch Oxidation mit 10 ml 95 %-iger Salpetersäure in Eisessig (5 Teile Salpetersäure in 100 Teilen Eisessig) und anschließender Behandlung mit 20 %-iger Ammoniaklösung hergestellt. Die gereinigte Hydroxyverbindung wird in einer 7 %-igen ethanolischen Ascorbinsäurelösung gelöst und ein Cordieritwabenkörper damit getränkt. Die Reduktion zu CuPc erfolgt durch Trocknen bei 90° C. Der Prozess wird drei bis viermal wiederholt. Auf dem nun deutlich blaugefärbten Trägerkörper sind ca. 2 g CuPc fixiert (Vollkontakt), die durch Testgasbehandlung in den aktiven Katalysator überführt werden. Anspringtemperatur 180° C.

11. 15 g CuPc werden durch langsames Einrühren in 120 g 26 % rauchende Schwefelsäure (Oleum) unter Kühlung auf unter 45° C eingebracht und anschließend der gesamte Ansatz auf 60° C erhitzt. Die Lösung wird in ein Gemisch aus 0.5 l gesättigter Kochsalzlösung und 400 g Eis gerührt, die Suspension mit kaltem Wasser verdünnt auf ca. 3 Liter und die CuPc-Sulfonsäure abfiltriert. Eine Lösung der Sulfonsäure in Wasser wird zum Tränken eines Cordierit Wabenkörpers benutzt. Nach Trocknung und Aktivierung entsteht der aus Beispiel 1 bekannte Trägerkatalysator mit der dort beschriebenen Aktivität und Haftfestigkeit.

Entsprechendes wird unter Verwendung von CoPc durchgeführt und gibt ähnliche Eigenschaften des Katalysators.

12. Durch Reaktion von Trichlormethyl CuPc mit Tetramethylthioharnstoff wird das wasserlösliche Isothiuroniumsalz erhalten. Nach Tränken eines Cordieritwabenkörpers, bzw. Kieselgur- oder NaY-Körnungen, wird durch Abspaltung der erzeugten hydrophilen Gruppe in schwach alkalischer Lösung das unlösliche CuPc zurückerhalten. Nach Trocknung der Trägerkörper sind die entsprechenden Vollkontakte vorhanden, die mit Testgas in die aktiven Katalysatoren überführt werden.

13. Eine Lösung von 10g Phthalogenbrillantblau IFGM in 200 ml Formamid wird hergestellt und der auf 100°C erwärmte Trägerkörper mit der Lösung getränkt. Nach 12 stündiger Trocknung bei 130°C ist der Trägerkörper mit CuPc voll durchgefärbt. Die Prozedur ist gegebenenfalls ein bis zweimal zu wiederholen. Die so ein- und aufgebrachten 2.1 g CuPc werden durch Testgas in den aktiven Katalysator überführt.

14. 100 g Zeolithgranulat NaY werden zweimal je 24 h mit einer 0.025 molaren Kupferacetatlösung behandelt und bei 250°C 24 h getrocknet (Einführung des Kupfers durch Ionenaustausch). Die so mit Kupferionen ausgetauschten Faujasite werden unter Stickstoff mit 125 g Phthalodinitril vermischt und in einem evakuierten Autoklaven 16 h bei 250°C erhitzt. Dabei erfolgt die Direktsynthese des CuPc in und auf den Zeolithen. Das dunkelblaue Granulat wird mit Aceton gewaschen, es enthält ca. 2.8 g CuPc. Der so erzeugte Trägerkatalysator wird mit Testgas bei 520°C in die aktive Form überführt. Die Ansprungtemperatur im Schüttbett ist 180°C.

Die gleiche Synthese mit einem Cordierit Wabenkörper als Träger führt zu einem aus Beispiel 1 bekannten Trägerkatalysator.

Entsprechend mit Nickel- und Kobaltacetat.

15. 18 g Tetracyanobenzol werden zusammen mit Kieselgur, das vorher mit Kupferacetat getränkt und getrocknet wurde, bei 300°C im Autoklaven unter Vakuum erhitzt. Es entsteht polymeres CuPc, das nach Beispiel 5 in aktiven Katalysator überführt wird.

Ebenso unter Verwendung von Zeolithgranulat als Träger.

16. Eine Kupfer- (ebenso Kobalt, Nickel, oder Eisen) Platte von 10x50 cm (gerollt) wird mit Tetracyanobenzol bei 400°C im Autoklaven unter Vakuum für 24 h erhitzt. Es entsteht ein Überzug aus polymerem CuPc (CoPc, NiPc, FeCp), der durch Behandeln mit Testgas in aktiven Katalysator überführt wird. Die Ansprungtemperatur liegt bei 250°C.

Entsprechend mit Metallpulver, Drehspänen und Metallwolle.

17. Ein nach Beispiel 1 mit CuPc getränkter Cordierit Wabenkörper wird nach Trocknung bei Zimmertemperatur wenige Minuten in konzentrierte Salpetersäure getaucht. Nach Ausspülen und Trocknen ist ein Katalysator entstanden, dessen Ansprungtemperatur bei 350°C liegt, mit 40 % Umsatz bei 440°C.

Ein nach Beispiel 1 mit CuPc getränkter Cordierit Wabenkörper wird nach Trocknung bei Zimmertemperatur für 1/2 Stunde in ein Gemisch aus 5 Teilen 95 %-iger Salpetersäure und 100 Teilen Eisessig getaucht. Nach Ausspülen und Trocknen ist ein Katalysator entstanden, dessen Ansprungtemperatur bei 250°C liegt, mit 40 % Umsatz bei 400°C.

Bei entsprechender Behandlung eines mit CoPc getränkten Cordierit Wabenkörpers wird ein Katalysator erzeugt, dessen Ansprungtemperatur bei 290°C liegt.

18. 15 g CuPc werden unter Rühren für 1/2 Stunde bei Zimmertemperatur mit einem Gemisch aus 5 Teilen 95 %-iger Salpetersäure in 100 Teilen Eisessig behandelt. Nach Abfiltrieren, Ausspülen und Trocknen ist der Katalysator ohne Träger vorhanden. Er wird entsprechend Beispiel 8 mit Trägern vermischt. Es entstehen Vollkontakte mit Umsätzen von 30 bis 40 % bei 350°C.

19. 50 g Cu-ausgetauschte Faujasite (siehe Beispiel 14) werden in einer Lösung von 10 g Dicyanobenzol in 200 ml Nitrobenzol 5 Stunden bei 180°C gerührt. Das durch und durch tiefblaue Produkt wird 20 Stunden lang mit Pyridin extrahiert. Es entstehen 1.2 g CuPc auf 50 g Faujasit, die durch Testgasbehandlung in den aktiven Katalysator überführt werden. Ansprungtemperatur 180°C.

20. 200 g offenporiges Sinterglas werden in einer Lösung von 50 g CuCl$_2$ in 1 Liter Wasser getränkt und danach bei 200°C getrocknet. Eine Mischung von 25 g Phthalsäureanhydrid, 130 g Harnstoff und 5 g Ammoniummolybdat wird geschmolzen und mit den kupfersalzbeladenen Sinterglasträgern für 3 Stunden auf 180°C erhitzt. Das Produkt wird mit verdünnter Salzsäure gefällt und gekocht. Nach dem Herausnehmen der Träger aus dieser Lösung werden sie mit kalter verdünnter Natronlauge und schließlich mit Wasser gewaschen. Das Produkt wird getrocknet. Es sind 11 g CuPc auf 200 g Sinterglasträger entstanden, die durch Behandlung mit Testgas in aktiven Katalysator überführt werden. Ansprungtemperatur 180°C.

21. Ein Alumosilikat-Monolith oder ein Rohrbündel aus offenporigem Sinterglas oder ein Cordierit -Monolith werden bei 90°C mit einer Suspension von CuPc in Ameisensäure getränkt und nach Abziehen der Flüssigkeit getrocknet. Es entstehen mit 1 bis 4 Gewichtsprozent CuPc beladene Trägerkatalysatoren. Nach Aktivierung entsprechend Beispiel 1 ergeben sich in einem synthetischen Abgas aus N$_2$ mit 1000 ppm NO, 1000 ppm NH$_3$ und 1 % O$_2$ bei Raumgeschwindigkeiten von 800 bis 1000 h$^{-1}$ Ansprungtemperaturen von 180°C (Alumosilikatträger), 220°C (offenporiger Sinterglasträger) und 210°C (Cordierit -Träger), sowie Umsätze von 90 % bezogen auf NO bei 320°C (Alumosilikat), 380°C (offenporiges Sinterglas) und 340°C (Cordierit).

22. Ein Alumosilikat-Monolith wird bei 90°C mit einer Suspension von CuPc in Ameisensäure getränkt und nach Abziehen und Trocknen durch Aufheizen in Testgas im Verlauf von 20 h auf 530°C aktiviert. Die Ansprungtemperatur in einem synthetischen Abgas entsprechend dem in Beispiel 21 genannten bei einer Raumgeschwindigkeit von 1500 h$^{-1}$ liegt bei 120°C, Umsätze von 50 % werden bei 180°C, von 90 % bei 230°C erreicht.

23. Ein Cordierit-Wabenkörper wird mit einmolarer wässriger Cu(NO$_3$)$_2$-Lösung unter Evakuieren getränkt. Nach Trocknen bei 120°C wird durch zweistündiges Erhitzen an Luft bei 500°C CuO erzeugt.

Anschließend wird entsprechend Beispiel 22 mit CuPc-Suspension getränkt und 12 Stunden getrocknet.

Der so erzeugte Katalysator hat in einem synthetischen Abgas wie in Beispiel 21 genannt und der Raumgeschwindigkeit von 1500 h⁻¹ eine Anspringtemperatur von 140°C und zeigt 90 % Umsatz bei 240°C.

24. Ein Cordierit-Wabenkörper wird bei 90°C mit einer Suspension von CuPc in Ameisensäure getränkt, die zugleich 150 g Kupferformiat gelöst enthält, und nach Abziehen der Flüssigkeit getrocknet. In einem oxidierenden Gasstrom wird bei 100 bis 160°C das Kupferformiat in CuO umgewandelt.

Der so erzeugte Katalysator hat in einem synthetischen Abgas und bei der Raumgeschwindigkeit entsprechend den in Beispiel 23 benutzten eine Anspringtemperatur von 140°C und zeigt bei 240°C einen Umsatz von 90 %.

Die Beispiele zeigen, daß die Fixierung der MPc durch Färbe- und Synthesemethoden im weitesten Sinne zu einer durch die Infrarotbanden manifestierten Wechselwirkung der organischen Substanz MPc mit den anorganischen Trägern führt, und daß diese Wechselwirkung nach der Überführung des Farbstoffes in den aktiven Katalysator erhalten bleibt, eine Mitführung verhindert und die katalytische Aktivität gegenüber trägerlosen aktiven Katalysatoren verändert.

**Patentansprüche**

1. Katalysator zum Entfernen von Stickoxiden, Kohlenmonoxid und/oder Restkohlenwasserstoffen aus Abgasen, erhältlich durch Behandlung von Metallphthalocyaninen mit NO und/oder $O_2$ bei erhöhten Temperaturen,
dadurch gekennzeichnet,
daß Metallphthalocyanine vor der Behandlung mit NO und/oder $O_2$ auf oder in einen Träger auf- bzw. eingebracht werden, und daß der Träger anschließend mit Stickoxiden und/oder Stickoxid-Kohlenmonoxid-Gemischen und/oder Sauerstoff und/oder Sauerstoff-Kohlenmonoxid-Gemischen oder nitrierenden oder oxidierenden Gasen oder Dämpfen bei Temperaturen oberhalb 120°C oder mit nitrierenden oder oxidierenden Lösungen behandelt wird.

2. Katalysator zum Entfernen von Stickoxiden, Kohlenmonoxid und/oder Restkohlenwasserstoffen aus Abgasen, erhältlich durch Behandlung von Metallphthalocyaninen,
dadurch gekennzeichnet,
daß Metallphthalocyanine mit Übergangsmetalloxiden gemeinsam gleichzeitig oder nacheinander auf oder in einen Träger auf- bzw. eingebracht werden.

3. Verfahren zum Herstellen eines Katalysators nach Anspruch 1, bei dem Metallphthalocyanine bei erhöhten Temperaturen mit NO und/oder $O_2$ behandelt werden,
dadurch gekennzeichnet,
daß Metallphthalocyanine vor der Behandlung mit NO und/oder $O_2$ auf oder in einen Träger auf- bzw. eingebracht werden, und daß der Träger anschließend mit Stickoxiden und/oder Stickoxid-Kohlenmonoxid-Gemischen und/oder Sauerstoff und/oder Sauerstoff-Kohlenmonoxid-Gemischen oder nitrierenden oder oxidierenden Gasen oder Dämpfen bei Temperaturen oberhalb 120°C oder mit nitrierenden oder oxidierenden Lösungen behandelt wird.

4. Verfahren zum Herstellen eines Katalysators nach Anspruch 1, bei dem Metallphatalocyanine bei erhöhten Temperaturen mit NO und/oder $O_2$ behandelt werden,
dadurch gekennzeichnet,
daß Metallphthalocyanine mit Stickoxiden und/oder Stickoxid-Kohlenmonoxid-Gemischen und/oder Sauerstoff und/oder Sauerstoff-Kohlenmonoxid-Gemischen oder nitrierenden oder oxidierenden Gasen oder Dämpfen bei Temperaturen oberhalb 120°C oder mit nitrierenden oder oxidierenden Lösungen behandelt und anschließend auf oder in einen Träger auf- bzw. eingebracht werden.

5. Verfahren zum Herstellen eines Katalysators nach Anspruch 2, bei dem Metallphthalocyanine behandelt werden,
dadurch gekennzeichnet,
daß Metallphthalocyanine mit Übergangsmetalloxiden gemeinsam gleichzeitig oder nacheinander auf oder in einen Träger auf- bzw. eingebracht werden.

6. Verfahren nach Anspruch 3, 4 oder 5,
dadurch gekennzeichnet,
daß die Metallphthalocyanine in einem Lösungsmittel gelöst werden, ein Pulver oder ein Formkörper mit der Lösung getränkt und das Lösungsmittel abgezogen wird.

7. Verfahren nach Anspruch 3, 4 oder 5,
dadurch gekennzeichnet,
daß die Metallphthalocyanine in einer Flüssigkeit suspendiert werden, ein Pulver oder ein Formkörper mit der Suspension getränkt und die Flüssigkeit abgezogen wird.

8. Verfahren nach Anspruch 3, 4 oder 5,
dadurch gekennzeichnet,
daß aus Lösungen mit darin suspendiertem Metallphthalocyanin-Pulver Oxide, Sulfide, Carbonate, Alumosilikate oder Zeolithe ausgefällt werden oder daß aus einem Pulver und einem Metallphthalocyanin-Pulver eine Suspension oder Paste hergestellt wird und daß der ausgefällte und getrocknete Niederschlag bzw. die erhaltene Suspension oder Paste gekörnt oder geformt, anschließend getrocknet oder bei Temperaturen bis zu 600°C gebrannt wird.

9. Verfahren nach Anspruch 3 oder 5,
dadurch gekennzeichnet,
daß die Metallphthalocyanine durch Überführung in lösliche Derivate gelöst werden, der Träger mit der Lösung getränkt und das Lösungsmittel abgezogen wird.

10. Verfahren nach Anspruch 3 oder 5,
dadurch gekennzeichnet,

daß die Metallphthalocyanine in oder auf dem Träger synthetisiert werden.

## Claims

1. A catalyst for removing nitrogen oxides, carbon monoxide, and/or residual hydrocarbons from exhaust gases and obtainable by treating metal phthalocyanines with NO and/or $O_2$ at elevated temperatures, characterized in that prior to being treated with NO and/or $O_2$, metal phthalocyanines are applied onto or into a carrier, and in that the carrier subsequently is treated with nitrogen oxides and/or mixtures of nitrogen oxide and carbon monoxide and/or with oxygen and/or mixtures of oxygen and carbon monoxide or with nitrating or oxidizing gases or vapors at temperatures above 120°C or with nitrating or oxidizing solutions.

2. A catalyst for removing nitrogen oxides, carbon monoxide, and/or residual hydrocarbons from exhaust gases and obtainable by treating metal phthalocyanines, characterized in that metal phthalocyanines are applied together with transition metal oxides onto or into a carrier, either simultaneously or successively.

3. A method of preparing a catalyst as claimed in claim 1, wherein metal phthalocyanines are treated with NO and/or $O_2$ at elevated temperatures, characterized in that prior to being treated with NO and/or $O_2$ metal phthalocyanines are applied onto or into a carrier, and in that the carrier subsequently is treated with nitrogen oxides and/or mixtures of nitrogen oxide and carbon monoxide and/or with oxygen and/or mixtures of oxygen and carbon monoxide or with nitrating or oxidizing gases or vapors at temperatures above 120°C or with nitrating or oxidizing solutions.

4. A method of preparing a catalyst as claimed in claim 1, wherein metal phthalocyanines are treated with NO and/or $O_2$ at elevated temperatures, characterized in that metal phthalocyanines are treated with nitrogen oxides and/or mixtures of nitrogen oxide and carbon monoxide and/or with oxygen and/or mixtures of oxygen and carbon monoxide or with nitrating or oxidizing gases or vapors at temperatures above 120°C or with nitrating or oxidizing solutions and subsequently are applied onto or into a carrier.

5. A method of preparing a catalyst as claimed in claim 2, wherein metal phthalocyanines are treated, characterized in that metal phthalocyanines are applied together with transition metal oxides onto or into a carrier, either simultaneously or successively.

6. The method as claimed in claim 3, 4, or 5, characterized in that the metal phthalocyanines are dissolved in a solvent, a powder or a molded body is impregnated with the solution, and the solvent is withdrawn.

7. The method as claimed in claim 3, 4, or 5, characterized in that the metal phthalocyanines are suspended in a liquid, a powder or a molded body is impregnated with the suspension, and the liquid is withdrawn.

8. The method as claimed in claim 3, 4, or 5, characterized in that oxides, sulfides, carbonates, alumino-silicates, or zeolites are precipitated from solutions containing metal phthalocyanine powder suspended therein, or that a suspension or paste is prepared from a powder and a metal phthalocyanine powder, and in that the precipitate deposited and dried or the suspension or paste obtained is granulated or molded and subsequently dried or fired at temperatures of up to 600°C.

9. The method as claimed in claim 3 or 4, characterized in that the metal phthalocyanines are dissolved by being converted into soluble derivatives, the carrier is impregnated with the solution, and the solvent is withdrawn.

10. The method as claimed in claim 3 or 5, characterized in that the metal phthalocyanines are synthesized in or on the carrier.

## Revendications

1. Catalyseur pour éliminer les oxydes d'azote, le monoxyde de carbone et/ou des restes d'hydrocarbures des gaz d'échappement, obtenu par traitement de métaux phtalocyanines avec NO et/ou $O_2$ à des températures élevées, caractérisé en ce que l'on introduit les métaux phtalocyanines, avant le traitement avec NO et/ou $O_2$, sur ou dans un support, et en ce que l'on traite ensuite le support avec des oxydes d'azote et/ou des mélanges d'oxydes d'azote et de monoxyde de carbone, et/ou de l'oxygène, et/ou des mélanges d'oxygène et de monoxyde de carbone, ou des gaz ou des vapeurs nitrurants ou oxydants, à des températures supérieures à 120°C, ou avec des solutions nitrurantes ou oxydantes.

2. Catalyseur pour éliminer les oxydes d'azote, le monoxyde de carbone et/ou des restes d'hydrocarbures des gaz d'échappement, obtenu par traitement de phtalocyanines métalliques, caractérisé en ce que les métaux phtalocyanines sont introduits avec des oxydes de métaux de transition, simultanément ou successivement, sur ou dans un support.

3. Procédé pour préparer un catalyseur selon la revendication 1, dans lequel on traite les phtalocyanines métalliques à des températures élevées avec NO et/ou $O_2$, caractérisé en ce que l'on introduit les métaux phtalocyanines, avant le traitement avec NO et/ou $O_2$, sur ou dans un support, et en ce que l'on traite ensuite le support avec des oxydes d'azote, et/ou des mélanges d'oxydes d'azote et de monoxyde de carbone, et/ou de l'oxygène, et/ou des des mélanges d'oxygène et de monoxyde de carbone, ou des gaz ou des vapeurs nitrurants ou oxydants, à des températures supérieures à 120°C, ou avec des solutions nitrurantes ou oxydantes.

4. Procédé pour préparer un catalyseur selon la revendication 1, dans lequel les métaux phtalocyanines sont traités à des températures élevées, avec NO et/ou O₂,

caractérisé en ce que

l'on traite les métaux phtalocyanines avec des oxydes d'azote et/ou des mélanges d'oxydes d'azote et de monoxyde de carbone, et/ou de l'oxygène, et/ou des mélanges d'oxygène et de monoxyde de carbone, ou des gaz ou des vapeurs nitrurants ou oxydants, à des températures supérieures à 120°C, ou avec des solutions nitrurantes ou oxydantes, et en ce qu'on les introduit ensuite sur ou dans un support.

5. Procédé pour préparer un catalyseur selon la revendication 2, dans lequel on traite des métaux phtalocyanines,

caractérisé en ce que

les métaux phtalocyanines sont introduits avec des oxydes de métaux de transition, simultanément ou successivement, sur ou dans un support.

6. Procédé selon l'une quelconque des revendications 3, 4 ou 5,

caractérisé en ce que

l'on dissout les métaux phtalocyanines dans un solvant, en ce que l'on imprègne une poudre ou un corps préformé avec la solution, et en ce que l'on élimine le solvant.

7. Procédé selon l'une quelconque des revendications 3, 4 ou 5,

caractérisé en ce que

l'on suspend les métaux phtalocyanines dans un liquide, en ce que l'on imprègne une poudre ou un corps préformé avec la suspension, et en ce que l'on élimine le liquide.

8. Procédé selon l'une quelconque des revendications 3, 4 ou 5,

caractérisé en ce que

l'on précipite des oxydes, des sulfures, des carbonates, des aluminosilicates ou des zéolithes à partir de solutions où se trouvent suspendues des poudres de métaux phtalocyanines, ou en ce que l'on réalise une suspension ou une pâte à partir d'une poudre et d'une poudre de métaux phtalocyanines et en ce que le précipité séparé et séché, ou la suspension ou la pâte obtenues, sont transformés en granulés ou formés, puis séchés ou calcinés à des températures jusqu'à 600°C.

9. Procédé selon l'une quelconque des revendications 3 ou 5,

caractérisé en ce que

l'on dissout les métaux phtalocyanines par transformation en dérivés solubles, en ce que l'on imprègne le support avec la solution, et en ce que l'on élimine le solvant.

10. Procédé selon l'une quelconque des revendications 3 ou 5,

caractérisé en ce que

les métaux phtalocyanines sont synthétisés dans ou sur le support.